# EUROPEAN PATENT SPECIFICATION

(11) **EP 1 522 352 B1**
(45) Date of publication and mention of the grant of the patent: **21.06.2006**
(21) Application number: 04256115.9
(22) Date of filing: 02.10.2004
(51) Int. Cl.: B05D 7/00

(54) **Primerless coating of heat-sensitive substrates and coating line**
Grundierungsfreie Beschichtung von wärmeempfindlichen Substraten und Beschichtungsstrasse
Revêtement de substrats sensibles à la chaleur exempt de couche de fond et ligne de revêtement

(30) Priority: 10.10.2003 US 510326 P
(43) Date of publication of application: 13.04.2005
(73) Proprietor: ROHM AND HAAS COMPANY, Philadelphia, Pennsylvania 19106-2399 (US)
(72) Inventor: Brown, David, 96138 Burgebrach (DE); Laubkermeier, Bernd, Blomberg 32825 (DE); Leonard, Michael F., Lansing, Illinois 60438 (US); Loies, James J., LaGrange, Illinois 60525 (US)
(74) Representative: Buckley, Guy Julian

(56) References cited:
- WO-A-03/068418
- US-A- 4 756 975
- US-A1- 2003 072 943
- US-B1- 6 630 211

## Description

This invention is concerned with a primerless method of and system for coating a heat-sensitive substrate. More particularly, the invention concerns the coating of plastic substrates, such as automotive plastics, with at least two coats of a single aqueous paint composition without using a primer.

### BACKGROUND

Automotive plastics, such as bumpers for automobiles are typically formed by injection-moulding thermoplastics, such as thermoplastic polyolefins (TPO), polypropylene, EPDM rubbers and mixtures thereof. The bumpers so formed usually have a grey or black appearance and may be used on automobiles without further treatment. However, to improve their aesthetics, bumpers are often painted to match the general color scheme of the automobile.

Painting a bumper with a water-borne paint comprises a multi-step process involving one or more pre-treatments, such as flame treatment, corona discharge treatment, plasma treatment and degreasing and cleaning, followed by the sequential application of a primercoat, a basecoat and at least one colorcoat in a series of three booths which may be called a "coating line". The painted bumper may further be finished with one or more clearcoats. The coatings may be applied by a spraying technique e.g. by a process involving the use of a succession of spray-robots, one for each coating layer, with each robot located in an isolated spray booth and each coating being subjected to natural or forced drying or curing drying before the next coat is applied.

Colorcoats for automotive plastics substrates on continuous paint lines or coating lines typically comprise a basecoat and a pigment or dye. A basecoat provides a coating having the general minimum required performance and processing properties. The basecoat and pigment or dye are usually supplied as separate compositions and then formulated, together with any other required components, into a colorcoat as desired by a paint formulator. The pigment or dye is added by the paint formulator to provide the coating with the desired aesthetic appeal. Other components may be added by the paint formulator to provide the coating with modified performance or processing properties.

Various modifications have been proposed to render the method of painting a plastics substrate safer, such as by eliminating the use of a flame treatment, more environmentally friendly, such as by reducing or eliminating the use of organic solvents, and/or more efficient, such as by reducing the number of steps required. For example:

US 6447844 B1, to Kawano et al. discloses a method in which the use of flame treatment or an organic solvent is eliminated from the pre-treatment step and in which the requirement of a primer coat is eliminated. In this method a polypropylene substrate is spray-washed with warm water, then degreased by spray-washing with an alkaline cleaning agent, and then spray-washed with deionized (DI) water. The cleaned polypropylene is then coated with a waterborne adhesion promoter, which is dried or baked at 60-120°C for 5-15 minutes, and then spray-coated with a topcoat, which is then baked at 70-120°C for 20-60 minutes. , The top paint is solvent borne and the method of Kawano et al. uses two separate coating compositions to form a finish on the substrate.

It is desirable to reduce the number of individual steps involved in coating a plastics substrate with waterborne coatings. It is particularly desirable to simplify the coating of a plastics substrate by a method which enables use of a single coating composition in a one-bake finish and does not require the use of a flame treatment or an organic solvent pre-treatment. Furthermore, it is desirable to paint a plastics substrate by a method which reduces the amount of in-process waste material produced. Still further, it would be desired to provide a coating line to enable primerless, one bake waterborne coatings for plastic substrates.

### STATEMENT OF THE INVENTION

The present invention in its various aspects is as set out in the accompagning claims.

In one aspect according to the present invention, methods of coating a heat-sensitive substrate comprise:
applying directly onto said substrate a first coating layer comprising i) a waterborne basecoat formulation comprising one or more than polymer or resin dispersion and ii) a waterborne adhesion promoter for promoting adhesion between said substrate and said basecoat;
applying directly onto said first coating layer a second coating layer comprising the said waterborne basecoat formulation;
optionally, applying directly onto said second coating layer at least one further coating; and,
baking or curing the coating.

The waterborne basecoat may itself be pigmented or colored, or a pigment, dye or colorant dispersion or solution may be added and mixed into the basecoat formulation as a separate component.

In another embodiment, the present invention comprises an automated coating system or continuous coating line for applying a primer free coating in two or more layers to a substrate, wherein the same coating formulation is applied to the substrate in each of the first and second coating layer.

### DETAILED DESCRIPTION

According to the present invention, one-bake, primerless methods for coating a plastics substrate with waterborne coatings comprise applying to the substrate a first coating layer of a mixture of waterborne basecoat formulation of one or more polymer or resin dispersion and one or more than one adhesion promoter, followed by applying a second coating layer and, optionally, a third coating layer comprising the same waterborne basecoat formulation and baking or curing. The coating method of the present invention can be carried out without flame treatment or organic solvent pre-treatment of plastic substrates, such as automotive plastics, and may or may not be preceded by aqueous degreasing pre-treatment of such substrates. Further, the one-bake method of present invention reduces the amount of in-process waste material produced because uncured coating material that is oversprayed may be recaptured as liquid, e.g. through a cyclone or vacuum hood, and fed back into a coating supply line.

In another embodiment, the present invention provides a coating line or continuous coating system in two or more coating booths to enable primerless, one bake waterborne coatings for plastic or other, e.g. metal, substrates in any color desired. The system for applying a primerless coating comprises an automated coating line having in it a series of two or more coating booths each for applying one of a series of one or two component waterborne or solvent borne coating layers, wherein each coating booth comprises at least one applicator device and a feed or supply controller adapted to feed to into the applicator device(s) in both of the first and second coating booths a desired amount of the same basecoat formulation and, further wherein, the feed or supply controller in the first coating booth is adapted to feed into the applicator device(s) in the first coating booth a desired amount of a waterborne or solvent borne adhesion promoter and, if desired, to mix the adhesion promoter and basecoat for application. For example, the first coating booth may comprise a mixer in said applicator device which is a single device adapted to mix the basecoat formulation and the adhesion promoter or the feed or supply controllers may meet upstream of the applicator device and an in line mixer downstream of this point may mix the basecoat formulation and the adhesion promoter. A third coating booth may comprise at least one applicator device, and a feed or supply controller adapted to feed to into it a desired amount of the same basecoat formulation as is fed into the first two coating booths. In this embodiment, the basecoat formulation is pigmented or colored so that it may form a colorcoat.

In another embodiment, the continuous coating line may comprise two coating booths adapted, for example, to coat a basecoat formulation without the desired colorant or pigment and a colorcoat formulation. Accordingly, the second component the first or basecoat booth may be one or more than one adhesion promoter and, in the second or colorcoat booth, the second waterborne component may be one or more than one aqueous or solvent borne pigment or colorant dispersion.

In yet another embodiment, the system comprises a last or final coating booth for applying a clearcoat in one or two components.

In any embodiment, the system may be adapted for applying solvent borne coatings instead of waterborne coatings by connecting the feed or supply controller to containers or sources of solvent borne polymer dispersions, adhesion promoters and colorant, pigment or dye dispersions instead of their waterborne counterparts. Solvent borne coatings and waterborne coatings may be used together if mutually miscible in the liquid state or if each comprises compatible polymers or resins.

"Paint" is a term commonly known in the art to mean a coating composition suitable for purpose which, when dry, forms an opaque coating on a substrate. A paint comprises a basecoat and one or more other components including at least one of: dyes and pigments.

"Clearcoat" is a term commonly known in the art to mean a coating composition suitable for purpose which, when dry, forms an optically clear or transparent coating on a substrate. A clearcoat comprises a basecoat and optionally one or more other components including at least one of: dyes or colorants and pigments.

"Basecoat" is a term commonly known in the art to mean the components of a paint or a clearcoat excluding any dye or pigment and any other custom additives. A waterborne basecoat formulation as employed in the present invention may comprise one or more than one aqueous polymer or resin dispersion.

All ranges cited herein are inclusive and combinable. For example, if an ingredient may be present in amounts of 4 wt% or more, or 10 wt% or more, and may be present in amounts up to 25 wt%, then that ingredient may be present in amounts of 4 to 10 wt%, 4 to 25 wt% or 10 to 25 wt%.

As used herein, the term "acrylic" includes both acrylic and methacrylic, and combinations and mixtures thereof, and the term "acrylate" includes both acrylate and methacrylate, and combinations and mixtures thereof.

As used herein, the "glass transition temperature" or Tg of any polymer may be calculated as described by Fox in *Bull. Amer. Physics. Soc.,* 1, 3, page 123 (1956). The Tg can also be measured experimentally using differential scanning calorimetry (rate of heating 20°C. per minute, Tg taken at the midpoint of the inflection). Unless otherwise indicated, the stated Tg as used herein refers to the calculated Tg.

As used herein, the softening point or melting point of any polymer or resin may be experimentally measured using differential scanning calorimetry (DSC), measured as the middle of the peak corresponding, respectively, to softening or melting in the DSC curve.

As used herein, the phrase "acid number" refers to the number of mg KOH required to neutralize the alkali-reactive groups in 1 g of polymer and has the units (mg KOH/g polymer). The acid number is determined according to ASTM standard test method D 1639-90.

As used herein, the phrase "coating booth" refers to a coating area or enclosure comprising a feed or supply controller, at least one applicator device fed by the controller and, if desired, a two-component mixer fed by the two-components for each coating layer. For applying single component coating formulations, the coating both need only comprise an applicator device with a feed or supply controller into the device.

As used herein, the phrase "feed or supply controller" refers to a line or hose connected to a coating formulation or component and an electronic feedback controller, e.g. a preset valve control means, a mechanical controller, e.g. a metered line, or a computer controller, e.g. a neural logic feedback controller, adapted to control the amount of each component, i.e. one or two, in each coating layer. The controller includes a line or hose for conveying all coating components into at least one applicator device.

As used herein, the phrase "hydroxyl number" refers to the number of milligrams (mg) of KOH equivalent to the hydroxyl groups present in each gram (g) of polymer and has the units (mg KOH/g polymer).

As used herein, the term "Mn" refers to number-average molecular weight, as determined by gel permeation chromatography (GPC).

As used herein, unless otherwise indicated, the phrase "per hundred parts" resin or "phr" means the amount, by weight, of an ingredient per hundred parts, by weight, of the total amount of resin, reactant monomer, and polymer contained in a composition, including cross-linking resins.

As used herein, the term "polymer" or includes polymers, copolymers and terpolymers, block copolymers and terpolymers, and mixtures thereof.

As used herein, the phrase "plastic substrate" refers to TPO, a substrate comprising at least about 50 wt% of a resin which may be a propylene homopolymer or a copolymer in which at least 60 wt% of the monomer content is propylene.

As used herein, the phrase "total solids" refers to the percentage of organic and inorganic solids, by weight, remaining after removal of volatile components, expressed as a portion of the total weight of a composition.

As used herein, the phrase "two-component" refers to a combination of two or more separate components used to make a coating, such that each component separately does not result in a cured coating layer.

As used herein, the phrase "waterborne" refers to those coatings or dispersions having 50 weight % or more of water, based on the total weight of the coating or dispersion composition. A "solvent borne" coating is any coating other than a waterborne coating.

As used herein, the phrase "wt%" stands for weight percent.

Unless otherwise indicated, viscosity units cited herein refer to those measured using a Brookfield viscometer.

The first and second, and any subsequent, coating layers of the present invention, may be applied wet on wet on the substrate and baked once to form a finish. The one or more than one polymer or resin dispersion employed in the waterborne basecoat formulation in the first and second coating layers, and ,optionally, in any subsequent coatings, may comprise an acrylic or polyurethane polymer, such as a urethane modified polycarbonate polymer. Further, the first and second coating layers may comprise solvent borne dispersions rather than waterborne dispersions, thereby eliminating the primer coat in a solvent based coating system for heat sensitive or plastic substrates, as well as for metal substrates.

According to the present invention, the basecoat formulation employed in at least the first and second coating layers may have the same formulation or may comprise the same one or more than one waterborne polymer or resin dispersion. The basecoats in the first and second coating layers are said to have the "same formulation" if the basecoats in the first and second coating layers are taken from one and the same container.

In the method of the present invention, the last coating to be applied may be a clearcoat, which clearcoat comprises, for example, one or two component urethane clearcoats, acrylic polyester, polyether, polycarbonate clearcoats, and mixtures thereof.

The method of the present invention may include a pre-treatment comprising degreasing and cleaning the substrate. Whilst the substrate may be pre-treated by conventional methods such as by flame treatment and/or washing with an organic solvent e.g. 1,1,1-trichloroethane, it is safer and more environmentally friendly techniques such as water washing with acid or alkaline detergents and rinsing with DI water. A suitable pre-treatment involves washing the substrate with water at 60-80°C, then degreasing the substrate with an alkaline cleaning agent, and then washing off the alkaline cleaning agent with DI water. The cleaned substrate may then be dried before being painted in accordance with steps A) to d) above.

In the method of the present invention, the first coating layer may be applied directly onto the clean substrate, that is without the use of any separately formed primer coat or other intermediate coating between the substrate and the first coating layer. Preferably, the first coating layer comprises i) a waterborne basecoat and ii) an adhesion promoter for promoting adhesion between said substrate and said basecoat.

The adhesion promoter of the first coating layer may be mixed into the waterborne basecoat before the mixture is sprayed onto the substrate. In another embodiment, the first coating layer may be applied by spraying the waterborne basecoat and the adhesion promoter simultaneously onto the substrate, so that the two components either mix when they are airborne before they reach the substrate or they mix immediately upon their contact with the substrate. In yet another embodiment, the first coating layer is formed by spraying the waterborne basecoat onto the substrate immediately followed by the spraying the adhesion promoter onto the substrate. In yet another embodiment, the first coating layer may be formed by spraying the adhesion promoter onto the substrate immediately followed by spraying the basecoat onto the substrate. In the latter two embodiments, it is important that the spraying of the second component occurs immediately after spraying of the first component, thereby to ensure good mixing of the two components and consequent formation of a homogenous first coating layer. Any second or subsequent coating layer may comprise two or more components mixed and applied or applied to mix in the same fashion as the first coating layer.

Provided that appropriately matched or compatible adhesion promoters are employed, any waterborne or solvent borne basecoat may be used in the method of the present invention. With knowledge of the present invention, a person skilled in the art will be able readily to select the appropriate basecoat/adhesion promoter pairs suitable for practicing the method of the present invention on a particular substrate from simple experimentation, such as by selection of an adhesion promoter, wetting agent or compatibilizing copolymer comprising repeat units found in each of the substrate and basecoat.

Suitable waterborne basecoats may be any which can be matched with the selected adhesion promoters chosen from chlorinated polyolefins (CPO) and modified isotactic polypropylenes (MPP) and MPP copolymers, and mixtures and combinations thereof. The basecoat may comprise polymers selected water-dispersible modified polyolefin type resins, water-dispersible acrylic resins, water-dispersible polyurethane resins, and mixtures thereof. Preferably, the basecoat comprises an aqueous dispersion of particles of a polyurethane. The polymer may be chosen from acrylic (co)polymers, including (co)polymers made from acrylic monomer with multiple unsaturation, acrylic modified alkyd, polyolefin, polyurethane, blocked polyisocyanate, acrylic urethane prepolymer, poly(vinyl acetate) and hydrolyzed forms thereof, polyester, polyamide, poly(phenylene oxide), and mixtures and combinations thereof, for example waterborne acrylic dispersions or emulsions. Preferably, the basecoat does not comprise an epoxy resin.

Suitable polyurethanes may be chosen from one- and two-component polyurethanes and polyurethane prepolymers, such as polyurethane polyol, polyester urethane, urethane modified polycarbonates, and polyisocyanate prepolymers, and mixtures and combinations thereof.

Suitable acrylic polymers used to form waterborne acrylic dispersions or emulsions useful in a basecoat may be addition polymerization products of acrylic monomers which may be selected from a large number of acrylic and methacrylic acids and esters along with suitable copolymerizable monomers. Examples of acids and esters which can be used include, but are not limited to acrylic acid, methacrylic acid, methyl methacrylate, ethyl acrylate, butyl acrylate, methyl acrylate, ethyl methacrylate, butyl methacrylate, 2-hydroxy ethyl acrylate, 2- hydroxyethylmethacrylate, propyl methacrylate, lauryl methacrylate, 2- hydroxy propyl methacrylate, 2-ethyl hexyl methacrylate, hexyl methacrylate, cyclohexyl methacrylate, ethoxyethyl acrylate, cyclohexyl acrylate, hexyl acrylate, and 2-hydroxy propyl acrylate. Suitable copolymerizable monomers may include styrene, α-methyl styrene, vinyl toluene, vinyl pyrrolidine, acrylonitrile, butadiene, and isoprene. Other functional groups provided by selection of appropriate monomer content may also provide basis for cross-linking or curing the acrylic resin, if desired. For example, -OH functionality, as provided by hydroxy ethyl acrylate or methacrylate, may be cross-linked with water dispersed polyisocyanates, and melamine formaldehydes. In addition, unsaturated carboxylic acid comonomers, e.g. (meth) acrylic acid, may provide a means by which the acrylic resin may be cross-linked by addition of a suitable cross-linking agent, such as salts of multivalent metal ions.

Exemplary polymers may comprise acid functional or hydroxyl functional acrylic polymers made from n-butyl methacrylate (n-BMA), ethyl hexyl methacrylate (EHMA), or mixtures thereof with acid functional, amine functional, glycidyl functional, hydroxyl functional comonomers, or their mixtures or combinations.

Waterborne acrylic emulsions or dispersions useful in basecoats may be prepared by conventional means known in the art, e.g., by free-radical initiated emulsion polymerization in an aqueous medium or by solution polymerization followed by dispersion in an aqueous medium by neutralization, use of surfactants, use of thickeners or combinations thereof. Such waterborne acrylic emulsions or dispersions may be homogeneous, or may be formed by core/shell or multi-staged polymerization techniques. Suitable acrylic polymers may have no functionality or may, for example, have a carboxylic acid number of 10 or more, or 50 or more, and may have acid numbers as high as 250. If present, the acid functionality may be neutralized with at least one base, such as ammonia or an amine, to promote dispersibility of the acrylic polymer in aqueous media.

Waterborne basecoats may also contain conventional coatings adjuvants such as, for example, tackifiers, emulsifiers, coalescing agents, plasticizers, buffers, neutralizers, thickeners or rheology modifiers, flow control agents, humectants, crosslinking agents including heat-, moisture-, light-, and other chemical- or energy- curable agents, wetting agents, biocides, antifoaming agents, plasticizers, waxes, organic solvents, defoamers, water repellants, slip or mar aids, anti- oxidants, and UV-stabilizers.

Suitable emulsifiers may include, but are not limited to, those conventionally used in emulsion polymerization, such as salts of alkyl-, aryl-, aralkyl-, alkaryl-sulfates or sulfonates; alkyl-, aryl-, aralkyl-, alkaryl-poly(alkoxyalkyl) ethers; alkyl-, aryl-, aralkyl-, alkaryl- poly(alkoxyalkyl) sulfates; alkali salts of long-chain fatty acids such as potassium oleate, typically alkyl diphenyloxide disulfonate; and the like. The preferred emulsifiers may include, for example, nonionic surfactants, such as nonyl phenyl poly(ethoxyethyl) ethers, fatty ethers and esters of glycerol or polyethylene glycol, or may include dodecyl benzene sulfonate and dioctyl sulfosuccinate.

A number of commercially available adhesion promoters may be suitable for use in the present method, when applied on a particular substrate and with a matched basecoat. For example, for coating polyolefin or TPO substrates with waterborne basecoats, chlorinated polyolefins (CPO), CPO copolymers, modified isotactic polypropylene (MPP), MPP copolymers, mixtures thereof and copolymers thereof provide water-insoluble adhesion promoters compatible with automotive plastic substrates. For coating metal and glass substrates with solvent borne basecoats, suitable adhesion promoters may comprise epoxy resins, phenolic resins, aminoplast resins and epoxy-acrylic resins, such as glycidyl (meth)acrylate copolymers.

Suitable CPO polymers may be chlorinated amorphous and crystalline poly-α-olefins, optionally containing carboxyl groups. CPO may comprise chlorinated propylene homopolymer or any propylene-α-olefin copolymer, preferably in which at least 60 wt % of the monomer content is propylene. The carboxyl group containing poly-α -olefin may have a weight average molecular weight in the range of from 4,000 to 150,000, a softening point in the range of from 75° to 115°C, and an amount of chlorine in the range of from 10 to 35 wt percent, based on the weight of the polyolefin.

CPOs lacking carboxyl groups may be further modified, e.g. by grafting with an imide or by grafting or copolymerizing with a monomer containing a carboxylic acid group or carboxylic acid anhydride group, e.g., maleic anhydride. If further modified with an imide, the imide may be present at between about 0.001 and about 10 wt % based on the weight of the polyolefin. If further modified with a monomer containing a carboxylic acid group or carboxylic acid anhydride group, the monomer may be present at between about 0.001 and about 10 wt % based on the weight of the polyolefin. The copolymers may be non-grafted or grafted copolymers. Examples of CPO may include chlorinated polyethylene or polypropylene or copolymers thereof with an α-olefin, or any of those polymers containing from 0 to 10 weight% of one or more than one unsaturated acid or anhydride, e.g. maleic anhydride, based on the weight of reactants used to make the polymer.

Suitable MPP or polypropylene-α-olefin copolymer (MPP copolymer) adhesion promoters may be polypropylene (PP) or polypropylene-α-olefin copolymers, such as isotactic PP and PP copolymers modified by oxidation, e.g. in the presence of an oxidizing agent, such as ozone, a peroxide, a perborate or a periodate compound, or by reaction with one or more than one unsaturated reactant containing one or more than one carboxyl, anhydride, hydroxyl or epoxy group, or combinations of those groups, such as maleic acid or anhydride, in the presence of an initiator. MPP (co)polymer may be modified at terminal olefin groups by reaction to form one or two terminal anhydride groups, or by reaction to form one or two terminal carboxyl, hydroxyl or epoxy groups. Terminally modified isotactic MPP or MPP copolymers give consistent dispersibility and adhesion properties in a variety of formulations and uses, and may readily be reacted with carboxyl or hydroxyl group containing polymers or resins to form MPP or MPP copolymer- adducts that provide enhanced compatibility between the coating and polyolefin containing substrates. Further, isotactic MPP or MPP copolymer may contain as much as 10, for example up to 5 carboxyl, anhydride, epoxy or hydroxyl groups per molecule to improve their water dispersibility.

Polypropylene (PP) or PP copolymers that may be modified to form MPP or MPP copolymers may be any such (co)polymers having a relatively low number average molecular weight (Mn) of from 500 or more, as determined by GPC, for example from 800 or more, or from 1,000 or more. Further, such suitable PP or PP copolymers should have an Mn of up to 10,000, for example, up to 7,000, or up to 4,000, or up to 2,500. The melt viscosity of such (co)polymers may range from 20-300 cP @ 149°C. By virtue of a low melting point, isotactic MPP or MPP copolymers may provide improved wet out and penetration of coatings, primers and film forming compositions of the present invention into TPO or polyolefin containing substrates, thereby improving the adhesion of low temperature curing coatings to these substrates. Low melting point isotactic MPP or MPP copolymer, e.g. less than 145°C, or less than 120°C and greater than 80°C, may be selected from polymers having either or both of a lower molecular weight or a reduced isotacticity. For example, modified isotactic polypropylene (PP) homopolymers may be any modified isotactic PP having from 40-90%, by weight, for example from 60-90%, by weight, of isotacticity or isotactic units, based on the total weight of monomeric units contained in the polymer, for example an olefin-terminal polypropylene. Also, MPP copolymers may comprise modified isotactic PP copolymers, such as any modified isotactic PP having up to 90 wt %, for example, up to 60 wt%, or up to 40 wt% of isotactic propylene units, based on the total weight of monomeric units contained in the copolymer, and should have 9 wt% or more, for example 40 wt% or more of such isotactic propylene units. Suitable modified isotactic PP copolymers may be random copolymers of not less than 10 weight% of propylene, based on the weight of the reactants used to make the copolymer, for example, not less than 40 weight%, with a higher α-olefin, i.e. having 3 to 12 carbon atoms, or a block copolymer of polypropylene with a poly(higher α-olefin). Examples of higher α-olefins include, butene- 1, pentene-1, octene-1, and, preferably, hexene-1, and mixtures thereof. Accordingly, lower isotacticity MPP copolymers may advantageously be used in low temperature cure applications, e.g. coatings for use on interior automotive plastics, to give improved wet out at low cure temperatures.

The adhesion promoter may comprise grafted polypropylene chloride, which includes polypropylene chloride or chlorinated polypropylene and maleic anhydride bonded together.

The adhesion promoter may be in the form of waterborne dispersions or emulsions. Such aqueous dispersions or emulsions may comprise other components, such as surfactants and organic solvents. Further, adhesion promoters may be solvent borne, particularly in solvent borne coatings.

The amount of adhesion promoter employed in the first coating layer or basecoat may range from 0.5 to 10 wt %, more preferably from 1 to 6 wt %, based on the total weight of the wet coating composition.

Organic solvents or co-solvents employable in one or both of the waterborne basecoat and aqueous adhesion promoter include one or more of C3-C8 alkylamines useful in the amount of from 0.1 to 1.0 wt %, based on the total weight of the wet coating composition, for neutralization or pH adjustment, coalescing solvents, such as C2-C8 glycolethers of C1-C6 alkanes, C2-C8 alkanolethers of C1-C6 alkanes, C3-C8 alkyl and aryl ketones and cyclic ethers, and C4-C8 lactams, such as n-methyl-2-pyrrolidone, useful in the amount of from 4 to 16 wt %, based on the total weight of the wet coating composition, as well as solvents for levelling and defoaming, such as C3-C10 alkanes, C4-C10 alkenes, C10-C40 petroleum distillates, mineral spirits, toluene, benzene, naphthalenes, and process oils, useful in the amount of from 0.1 to 1.0 wt %, based on the total weight of the wet coating composition.

The basecoat formulation may comprise components in addition to the waterborne basecoat and the adhesion promoter. For example, the first coating layer may comprise one or more of dyes and pigments. Alternatively, additional components such as pigment or colorant dispersions may be added to the basecoat as a separate component, e.g. through a separate feed means.

In one embodiment of the present invention, the substrate may be TPO, polyethylene (PE), polypropylene (PP), PE/EPDM, PP/EPDM; acrylonitrile/butadiene/styrene (ABS); polycarbonate (PC); polyacetal; or mixtures thereof such as ABS/PC. Such substrates may be used as automotive plastics for interior and exterior use, and may be used for other uses, including molded articles, toys, sporting goods, and cases or coverings for electronic devices and small appliances. In this embodiment, the basecoat comprises polymer or resin binders chosen from acrylic (co)polymers, including (co)polymers made from acrylic monomer with multiple unsaturation, acrylic modified alkyd, polyolefin, polyurethane, blocked polyisocyanate, acrylic urethane prepolymer, poly(vinyl acetate) and hydrolyzed forms thereof, polyester, polyamide, poly(phenylene oxide), and mixtures and combinations thereof. The adhesion promoter may be chlorinated polyolefin (CPO), CPO copolymer, modified isotactic polypropylene (MPP), MPP copolymer, or mixtures thereof in an aqueous dispersion or emulsion.

The second coating layer which in the present invention is applied directly onto the first coating layer, and, optionally, the third coating layer, may comprise the same waterborne basecoat formulation as employed in the first coating layer. Accordingly, the waterborne basecoat formulation may be pigmented to effectively form a colorcoat. The amount of pigment, colorant or dye employed in the second coating layer may be from 0.5 to 10 wt %, preferably from 1 to 6 wt %, based on the total weight of the wet coating.

Suitable pigments or colorants may comprise metal oxides, such as red iron oxide, rutile and anatase titania, carbon black, treated micas, such as iron oxide grey and synthetic iron oxide yellow, metallic pigments, such as aluminum flake or inhibited aluminum, and organic pigments, such as phthalocyanines, like copper phthalocyanine blue, perylene red and maroon, quinacridone magenta and dioxazine carbazole violet.

If any additional coating layer(s) is/are to be applied on the second coating layer such coating layer(s) may comprise the same basecoat as employed in the first and second coating layers, or may comprise a different waterborne or even a solvent borne coating. For example, one or more of the additional coating(s), such as at least the final coating, may be a clearcoat which comprises the same basecoat formulation or dispersion as employed in the first and second coating layers, optionally further comprising a curing agent component.

The second and each subsequent coating may comprise up to 50%, for example 15% or less, or 5% or less, e.g. 0%, of the amount of adhesion promoter employed in the first coating layer. For example, the second coating layer may contain 25 % or less of the amount of adhesion promoter employed in the first coating layer; or the third coating layer may contain 10% or less of the amount of adhesion promoter employed in the first coating layer.

The method of the present invention enables wet on wet coating methods, i.e. after each coating is applied, the coating may not be dried before the next coating is applied. Alternatively, because the basecoats have the same waterborne resin or polymer dispersion, it is possible to apply any number of coatings without regard for whether any previously applied coating is dry. This enables a potential reduction in the overall time for painting a substrate and energy savings in the amount of baking or irradiation needed to cure. After all coatings are applied, the coated substrate may be baked or otherwise cured. Baking may be effected in any conventional manner, for example, curing at 160 to 250°F (71 to 121 °C), for example, curing at from 160 to 200 °F (71 to 93.3°C) for at least 1 minute, for example, for 3 minutes or more, or 10 minutes or more and for 60 minutes or less, for example, 45 minutes or less, or 30 minutes or less, or 20 minutes or less. Radiation curing may be effected using ultraviolet (UV), electron beam, near infrared (NIR) or actinic radiation where coating components are suitable for radiation curing, e.g. are acrylics, and comprise from 0.1 to 10 phr of photo- or UV initiators such as alpha cleavage photoinitiators, hydrogen abstraction photoinitiators, and the like. Suitable alpha cleavage photoinitiators include, for example, benzoin, benzoin ethers, benzyl ketals, such as benzyl dimethyl ketal, acyl phosphines, such as diphenyl (2,4,6-trimethyl benzoyl) phosphine oxide, aryl ketones, such as 1-hydroxy cyclohexyl phenyl ketone, and the like. Suitable hydrogen abstraction photoinitiators include, for example, Michler's ketone, and the like. Examples of radical photoinitiators useful in the present invention are Irgacure® 651, a dimethoxy phenyl acetophenone, and Irgacure® 2959, a 2-hydroxy, ethoxyphenyl, 2-hydroxy, 2-methylpropane-1-one initiator, each from Ciba-Geigy, Tarrytown, N.Y.

Coatings may range from 15 µm to 100 µm thick, with each coating layer ranging from 5 µm to 25 µm thick. For example, two layer coatings may comprise each of a 5 µm to 15 µm basecoat and a 5 µm to 15 µm colorcoat. Coatings in three or more layers may comprise the basecoat and colorcoat, as well as one or more of additional colorcoats, clearcoats having metallic pigment therein, metallic-look clearcoats or colorcoats having metal flake or metal powder pigment therein, clearcoats, and any combination thereof, such as a metallic-look clearcoat and a clearcoat thereover. Individual coating layer thickness in a coating as applied may vary over a wide range, as measured by the amount of material applied to the substrate to form each layer, i.e. the length of time material is applied at a given application rate (in pounds or kilograms solids per minute) to form each coating layer. The ratio of coating layer thicknesses, from bottom to top, in a two layer coating may be 1:0.2 to 1:5, for example, from 1:0.33 to 1:3, or from 1:0.5 to 2:1. In a three or more layer coating, the ratio of the third or any subsequent coating layer thickness to the thickness of the second or colorcoat layer may be from 1:0.2 to 1:5, for example, from 1:0.33 to 1:3, or from 1:0.5 to 2:1. A typical three layer coating may, for example, have a thickness ratio, from bottom to top, of 1:0.75:0.75.

The coatings may each be applied by applicator devices, such as those used in spraying, electrostatic bell, cascade coating, rotational fogging, dip coating or film casting devices and techniques. Such devices and techniques are well known in the art, for example, electrostatic or pneumatic spraying is employed. All devices and techniques may be automated robotically.

Suitable substrates may be formed of plastics, such as automotive plastics for interior and exterior use, wood, glass or metal. Plastics substrates which can be painted by the method of the present invention include polyolefins, polyamides, poly(meth)acrylates, polycarbonates, polystyrenes, polyacetals, polyurethanes, and combinations thereof. Examples of substrates include automobile bumpers and exterior molding made from plastics, including TPO, which is a polypropylene containing compound modified with rubber, polypropylene (PP), polyethylene, EPDM, ABS, ABS-PC, and PP in admixture with other thermoplastic and/or engineering plastics, such as PP/EPDM (ethylene propylene diene rubber).

The system for performing the method of the present invention in a continuous fashion comprises a series of two coating booths, each adapted to receive, mix and apply a desired amount of one and the same basecoat formulation and, optionally, a second component, each component fed via feed or supply lines to an applicator device to form a coating layer. A third or subsequent coating booth may be adapted to receive, mix and apply a desired amount of one or two component formulation. Accordingly, each coating booth may comprise a two-component mixing means fed by the components for each two-component coating layer. Mixing means and applicator devices may comprise a single device, for example, electrostatic or pneumatic spray guns or rotational foggers having two feed or supply lines and an internal mixing chamber. Further, mixing means and applicator devices may comprise two separate devices, such as a mixing tee or static mixer fed by two feed or supply lines which tee or mixer is upstream from and feeding a spray gun or fogger. Applicator devices may comprise two separate spray or fogger heads each having a separate supply or feed line and adapted either to mix the component feeds or directed to spray them so that they mix in spray or on the substrate. Each feed or supply line may be metered or hoppered. A booth for applying a one-component clearcoat, or any other one-component coating layer, may have no mixing means.

In one embodiment, the continuous system or coating line which may be a robotic, computer-controlled coating line having a coating booth for each coating layer. The method may comprise sequentially applying multiple coating layers using, for example, a robot for each layer or coating booth equipped with one or more than one applicator devices adapted to apply a one component coating or to mix and apply a two-component coating, or using a single robot for the whole line equipped with one or more than one applicator devices having multiple controlled feeds leading into it. When using a robotic coating line, the applicator devices used to apply the first and second coating layers may be electrostatic spray guns or bells, or pneumatic spray guns or rotational foggers comprising one or at least two spray or fogger heads. If two spray heads are used, one of the spray heads may be used to apply the basecoat and another spray head may be used to apply the adhesion promoter, when applying the first coating layer, and/or may be used to apply the colorant and/or pigment, when applying the second coating layer. In any case, the feed or supply lines in each of the first coating booth and the second coating booth and, optionally, any subsequent booth comprise one feed or supply line from the waterborne or solvent borne basecoat formulation and one feed or supply line from the appropriate second component, i.e. adhesion promoter for the first coating layer, colorant or pigment for the second coat and a curing agent for a clearcoat, such as a polyol for polyurethane.

The method of the present invention enables the reduction of in-process wastes, as fewer coating layers means less overspray and because waste from the first coating layer or booth can be used either by recyling the waste into a separate recycle feed or supply line into the same coating booth. Recycle feed or supply lines may be linked directly to an applicator device. Recycle lines may comprise filters, e.g. a 70 mesh filter, to remove foreign debris. By continuously monitoring the composition of the waste materials obtained from the different coating steps and employing separate feeds of basecoat, adhesion promoter and other paint additives (e.g. pigments and dyes), it is possible to reuse the waste by adding it to the basecoat and making appropriate adjustments to the other feeds to accommodate for the change in the basecoat composition.

The method of the present invention may be carried out by hand using handheld applicators, such as an electrostatic or pneumatic spray gun equipped with two-component feed or supply lines and an internal mixing chamber.

The present invention shall now be further described by way of exemplification.

### EXAMPLE 1: Coating a TPO (PP-EPDM) substrates with waterborne basecoat formulation and adhesion promoter in four different colors

Four TPO substrates were prepared for coating by washing the substrates with an alkaline cleaning agent and then rinsing the washed substrates with a DI (deionized) water spray. The substrates were then coated with a two-component basecoat comprising a colored urethane modified polycarbonate (urethane resin having a polycarbonate backbone) waterborne basecoat formulation sold, under the trade name WB 100 (available from Rohm and Haas Company, Lansing, IL) and a waterborne CPO adhesion promoter having 1.85 wt% of surfactant or surface active agent, based on the total weight of the adhesions promoter. Four different color formulations of the adhesion promoter and waterborne basecoat mixture were mixed applied to four separate substrates, as shown in the following Table 1:

**TABLE 1 - Waterborne Basecoat and CPO Mixture**

| **Example / Color** | **Formulation (wt. %)** | | | | | | |
|---|---|---|---|---|---|---|---|
| | | | | | | | |
| | Butyl glycol | m-pyrol | D.I. Water | Urethane Modified polycarbonate resin | Pigment | Surface Active Agent | CPO (resin only) |
| 1A/ Red | 8.5% | 5.5% | 65% | 14.94% | 1.99% | 0.57% | 3.5% |
| (Perylene maroon and Quinacridone magenta, with small amounts of Inorganic iron oxide red, Titanium dioxide and Carbon black) | | | | | | | |
| 1B/ Silver | 11.0% | 5.0% | 64% | 14.29% | 2.66 | 0.55% | 2.5% |
| (Inhibited aluminum pigment with a small amount of Copper phthalocyanine blue) | | | | | | | |
| 1C/ Black | 8.5% | 6.0% | 65% | 15.86% | 0.67% | 0.47% | 3.5% |
| (Carbon black with Inorganic iron oxide grey, and small amounts of Copper phthalocyanine blue and Dioxazine carbazole violet) | | | | | | | |
| 1D/ White | 5.0% | 5.0% | 51% | 15.37% | 19.98% | 1.15% | 2.5% |
| (Titanium dioxide with small amounts of Synthetic iron oxide yellow pigment and Carbon black) | | | | | | | |

Each first coating layer was applied to the substrates in a spray booth, comprising a robotically controlled spray head fed by each of a metered line leading to it from the waterborne basecoat dispersion and a second metered line leading to it from the adhesion promoter. The metering device in the lines feeding the sprayhead was programmed to mix the basecoat formulation and adhesion promoter in the proportions given so as to form a single spray having a desired composition. Sufficient material was sprayed at each substrate so as to form a wet coating of about 8 microns.

The coating layers thus formed were sufficiently viscous so that they remained adhered to the substrates with no sagging as the substrates were transported from the first spray booth to a second spray booth.

### EXAMPLE 2: Coating coated TPO substrates with a waterborne basecoat formulation

In the second spray booth, one robotically controlled sprayhead was programmed to apply a second coating layer directly on top of the wet first coating layer. The second coating layer comprises a) the pigmented waterborne basecoat formulation employed in the first coating layer i.e. WB 100 as shown in Table 1, except without CPO and without 1.85 wt. % (roughly 1/50^{th}) of the surface active agent or surfactant, based on the total weight of surfactant.

Sufficient material was applied on each substrate so as to form a wet coating of about 6 microns. The two layers of coating thus formed were sufficiently viscous so that they remained adhered to each substrate as each substrate was transported from the second spray booth to a third spray booth.

### EXAMPLE 3: Coating coated TPO substrates with a second coating layer of waterborne basecoat formulation

In the third spray booth, one robotically controlled sprayhead was programmed to apply a third coating layer directly on top of the wet first and second coating layers. The third coating layer comprises the pigmented waterborne basecoat formulation employed in the second coating layer. Sufficient material was applied on each substrate so as to form a wet coating of about 6 microns, for a total wet coating thickness of 20 µm. The wet coatings thus formed were sufficiently viscous that they adhere to each substrate as the substrate is transported to an oven, where the coatings were dried and cured in conventional manner at 80°C for 2 hours.

### EVALUATION OF THE COATED SUBSTRATES

Each of the dried coated substrates formed after completion of Examples 1, 2, and 3 above were subjected to the performance evaluation tests set out below.

### a) Cross cut adhesion test (DIN EN ISO 2409; Section 4.1.1 - published 1994)

Three 10 cm x 10 cm square samples of each TPO substrate coated with two dried and cured coatings according to Examples 1, 2 and 3 above were tested. A 6 cm x 6 cm lined grid was cut in the surface of each sample, each grid line being 2 cm wide. The surface of the substrate was then brushed two times in a diagonal direction with a soft brush, to remove any loose coating, and then each substrate was subjected to the test. In each test, a 2.5 cm wide tape having a normal adhesion strength of 10N was employed.

As the tape was pulled from the coated surface of the substrate the observed percentage of coating lifted from the substrate with the tape was measured and rated according to the following criteria:
Gt 0 = no loss
Gt 1 = less than or equal to 5% loss
Gt 2 = less than or equal to 15% loss
Gt 3 = less than or equal to 35% loss
Gt 4 = less than or equal to 65% loss
Gt 5 = adhesion loss greater than 65%

An acceptable coating demonstrates an adhesion loss of no more than 5%.
In the above example, the three samples each demonstrated a loss of no more than 2%, thereby demonstrating a satisfactory adhesion.

### b) Condensation blister test (DIN 50 017 KK; Section 2 and 4.1 - published 1982)

Three 10 cm x 10 cm square panels of each of the TPO substrates coated with three dried and cured coatings according to Examples 1, 2 and 3 above were tested. Each panel was placed in a condensation test chamber at 40 +/- 3°C, 100% RH, for 240 hrs, followed by 30 minutes acclimatization at room temperature. The panels were placed at least 100 mm from the walls of the chamber, at least 200 mm from the water source, and at least 20 mm from each other.

Each panel was graded according to the number of blisters and the size of the blisters on each sample, the blisters being graded according to DIN 53209 (published 1970).

A satisfactory performance of the coating exhibits no blistering, i.e. m and g both = 0. The surface of the coating must remain uniform, and not demonstrate any defects such as pores, coarse cracks, which detract from the appearance of the panel.

Each tested panel demonstrated a satisfactory performance.

## Claims

1. A method of coating a heat-sensitive substrate comprising:
applying directly onto said substrate a first coating layer comprising i) a waterborne basecoat formulation comprising one or more than one polymer or resin dispersion and ii) a waterborne adhesion promoter for promoting adhesion between said substrate and said basecoat;
applying directly onto said first coating layer a second coating layer comprising i) the said waterborne basecoat formulation; and, baking or curing the coating.

2. A method as claimed in any one of the preceding claims, further comprising applying directly onto said second coating layer at least one further coating which comprises the said waterborne basecoat formulation.

3. A method as claimed in claim 1 or claim 2, wherein the first and second coatings are applied wet on wet on the substrate before baking or curing.

4. A method as claimed in claim 1, wherein the said one or more than one polymer or resin dispersion employed in the said waterborne basecoat formulation comprises acrylic or polyurethane polymer.

5. A method as claimed in any one of the preceding claims, further wherein the last said at least one further coating to be applied is a clearcoat.

6. A method as claimed in any one of claims 1 to 5, wherein said curing comprises radiation curing the said coating.

7. An automotive plastic substrate coated according to the method as claimed in any one of claims 1 to 6.

8. An automated or continuous coating line for applying coatings in two or more layers on heat sensitive substrates, comprising a series of two or more coating booths each for applying one of a series of one or two component waterborne or solvent borne basecoat coating layers, wherein each said coating booth comprises at least one applicator device and a feed or supply controller adapted to feed into both of the said at least one applicator device in the first and second coating booths a desired amount of the same waterborne or solvent borne basecoat formulation and, further wherein, the said feed or supply controller in the said first coating booth is adapted to feed into the said applicator device(s) in the first coating booth a desired amount of waterborne or solvent borne adhesion promoter, **characterized in that** said same waterborne or solvent borne basecoat formulation is supplied for the application of the two basecoat layers from one and the same container.

9. The continuous coating line as claimed in claim 8, wherein the said feed or supply controller in the said first coating booth is also adapted to mix the said adhesion promoter and basecoat for application.

10. A continuous coating line as claimed in claim 8 or claim 9, comprising a third coating booth, wherein the said third coating booth comprises at least one applicator device, and a feed or supply controller adapted to feed to into it a desired amount of the said same basecoat formulation as is fed into the said first and second coating booths.

11. A continuous coating line as claimed in any of claims 8 to 10, including a last coating booth comprising feed or supply means to supply a clearcoat formulation to at least one applicator device and at least one applicator device for applying a clearcoat layer.

12. A continuous coating line as claimed in any of claims 8 to 10, wherein said first coating booth comprises a mixer in said applicator device adapted to mix the said basecoat formulation and the said adhesion promoter.

## Patentansprüche

1. Verfahren zum Beschichten eines wärmeempfindlichen Substrates, umfassend das direkte Aufbringen einer ersten Beschichtungsschicht, umfassend i) eine Grundierungsformulierung auf Wasserbasis, umfassend eine oder mehr als eine Polymer- oder Harzdispersion, und ii) einen Haftvermittler auf Wasserbasis zum Fördern der Haftung zwischen dem Substrat und der Grundierung, auf das Substrat,
das direkte Aufbringen einer zweiten Beschichtungsschicht, umfassend i) die Grundierungsformulierung auf Wasserbasis, auf die erste Beschichtungsschicht, und
das Backen bzw. Brennen oder Härten der Beschichtung.

2. Verfahren nach dem vorstehenden Anspruch, ferner umfassend das direkte Aufbringen mindestens einer weiteren Beschichtung, welche die Grundierungsformulierung auf Wasserbasis umfasst, auf die zweite Beschichtungsschicht.

3. Verfahren nach Anspruch 1 oder 2, wobei die ersten und zweiten Beschichtungen nass auf nass auf das Substrat vor dem Backen oder Härten aufgebracht werden.

4. Verfahren nach Anspruch 1, wobei die eine oder mehr als eine Polymer- oder Harzdispersion, welche in der Grundierungsformulierung auf Wasserbasis verwendet wird, ein Acryl- oder Polyurethanpolymer umfasst.

5. Verfahren nach einem der vorstehenden Ansprüche, wobei ferner die letzte der mindestens einen weiteren aufzubringenden Beschichtung ein Klarlack ist.

6. Verfahren nach einem der Ansprüche 1 bis 5, wobei das Härten Bestrahlungshärten der Beschichtung umfasst.

7. Kraftfahrzeug-Kunststoffsubstrat, beschichtet nach dem Verfahren gemäß einem der Ansprüche 1 bis 6.

8. Automatisierte oder kontinuierliche Beschichtungsstraße zum Aufbringen von Beschichtungen in zwei oder mehr Schichten auf wärmeempfindliche Substrate, umfassend eine Serie von zwei oder mehr Beschichtungseinheiten bzw. -kabinen, jede zum Aufbringen einer von einer Serie von Ein- oder Zweikomponenten-Grundierungsbeschichtungsschichten auf Wasserbasis oder Lösungsmittelbasis, wobei jede Beschichtungseinheit mindestens eine Applikationsvorrichtung und einen Beschickungs- oder Zuführungscontroller umfasst, angepasst, um in beide der mindestens einen Applikationsvorrichtung in den ersten und zweiten Beschichtungseinheiten eine gewünschte Menge der gleichen Grundierungsformulierung auf Wasserbasis oder Lösungsmittelbasis einzuspeisen, und wobei ferner der Beschickungs- oder Zuführungscontroller in der ersten Beschichtungseinheit angepasst ist, in die Applikationsvorrichtung(en) in der ersten Beschichtungseinheit eine gewünschte Menge an Haftvermittler auf Wasserbasis oder Lösungsmittelbasis einzuspeisen, **dadurch gekennzeichnet, dass** die gleiche Grundierungsformulierung auf Wasserbasis oder Lösungsmittelbasis für das Aufbringen der zwei Grundierungsschichten aus ein und demselben Behälter zugeführt wird.

9. Kontinuierliche Beschichtungsstraße nach Anspruch 8, wobei der Beschikkungs- oder Zuführungscontroller in der ersten Beschichtungseinheit auch angepasst ist, den Haftvermittler und die Grundierung zum Aufbringen zu mischen.

10. Kontinuierliche Beschichtungsstraße nach Anspruch 8 oder Anspruch 9, umfassend eine dritte Beschichtungseinheit, wobei die dritte Beschichtungseinheit mindestens eine Applikationsvorrichtung und einen Beschickungs- oder Zuführungscontroller, angepasst, darein eine gewünschte Menge der gleichen Grundierungsformulierung einzuspeisen, wie die, welche in die ersten und zweiten Beschichtungseinheiten eingespeist worden ist, umfasst.

11. Kontinuierliche Beschichtungsstraße nach einem der Ansprüche 8 bis 10, einschließend eine letzte Beschichtungseinheit, welche Beschickungs- oder Zuführungsmittel umfasst, um eine Klarlackformulierung zu mindestens einer Applikationsvorrichtung zuzuführen, und mindestens eine Applikationsvorrichtung zum Aufbringen einer Klarlackschicht.

12. Kontinuierliche Beschichtungsstraße nach einem der Ansprüche 8 bis 10, wobei die erste Beschichtungseinheit einen Mischer in der Applikationsvorrichtung umfasst, angepasst, um die Grundierungsformulierung und den Haftvermittler zu mischen.

## Revendications

1. Procédé de revêtement d'un substrat sensible à la chaleur comprenant : l'application directement sur ledit substrat d'une première couche de revêtement comprenant i) une formulation aqueuse de couche de base comprenant une ou plus d'une dispersion d'un polymère ou d'une résine et ii) un promoteur d'adhésion aqueux pour favoriser l'adhésion entre ledit substrat et ladite couche de base; l'application directement sur ladite première couche de revêtement d'une seconde couche de revêtement comprenant i) ladite formulation aqueuse de couche de base ; et cuisson ou durcissement du revêtement.

2. Procédé tel que revendiqué dans la revendication précédente, comprenant en outre l'application sur ladite seconde couche de revêtement, d'au moins un autre revêtement qui comprend ladite formulation aqueuse de couche de base.

3. Procédé selon la revendication 1 ou 2, **caractérisé en ce que** le premier et le second revêtement sont appliqués humide sur humide sur le substrat avant cuisson ou durcissement.

4. Procédé selon la revendication 1, **caractérisé en ce que** ladite dispersion d'un ou plus d'un polymère ou de résine utilisée dans ladite formulation aqueux de couche de base comprend un polymère acrylique ou un polyuréthane.

5. Procédé selon l'une quelconque des revendications précédentes, en outre **caractérisé en ce que** dans ledit, un autre revêtement pour être appliqué est un revêtement incolore.

6. Procédé selon l'une quelconque des revendications 1 à 5, **caractérisé en ce que** ledit durcissement comprend le durcissement par radiation dudit revêtement.

7. Substrat plastique pour automobile revêtu selon le procédé revendiqué dans l'une quelconque des revendications 1 à 6.

8. Ligne de revêtement automatisée ou continue pour application de revêtements en deux ou plus de deux couches sur des substrats sensibles à la chaleur, comprenant une série de deux ou plus de deux cabines de revêtement, chacune pour l'application d'une série de couches de revêtement pour couche de base d'un ou de deux composants aqueux ou à base de solvant, **caractérisée en ce que** chacune desdites cabines comprend au moins un dispositif applicateur et un contrôleur d'alimentation ou d'approvisionnement adapté pour alimenter à la fois dans ladite au moins un dispositif d'application dans la première et la seconde cabine de revêtement d'une quantité désirée de la même formulation pour revêtement de base aqueuse ou à base de solvant et en outre **caractérisée en ce que** ledit contrôleur d'alimentation ou d'approvisionnement dans ladite première cabine de revêtement est adapté pour alimenter le ou lesdits dispositifs applicateurs dans la première cabine de revêtement d'une quantité désirée du promoteur d'adhésion aqueux ou à base de solvant, **caractérisée en ce que** ladite formulation pour revêtement aqueuse ou à base de solvant est fournie pour l'application des deux couches de revêtement de base à partir d'un et même réservoir.

9. Ligne de revêtement en continu selon la revendication 8, **caractérisée en ce que** ledit contrôleur d'alimentation ou d'approvisionnement est aussi adapté pour mélanger ledit promoteur d'adhésion et la couche de base.

10. Ligne de revêtement en continu selon la revendication 8 ou 9, comprenant une troisième cabine de revêtement, **caractérisée en ce que** ladite troisième cabine de revêtement comprend au moins un dispositif applicateur, et un contrôleur d'alimentation ou d'approvisionnement adapté pour l'alimenter en une quantité désirée de la même dite formulation de revêtement de base comme en sont alimentées lesdites première et seconde cabines.

11. Ligne de revêtement en continu selon l'une quelconque des revendication 8 à 10, comprenant une dernière cabine de revêtement comprenant un moyen d'alimentation ou d'approvisionnement et au moins d'un dispositif applicateur pour application d'un revêtement transparent.

12. Ligne de revêtement en continu selon l'une quelconque des revendication 8 à 10, **caractérisée en ce que** la première cabine de revêtement comprend un mélangeur dans ledit dispositif applicateur adapté pour mélanger ladite formulation de revêtement de base et ledit promoteur d'adhésion.
